# EUROPÄISCHE PATENTANMELDUNG

(11) **EP 3 955 071 A1**
(43) Veröffentlichungstag der Anmeldung: **16.02.2022**
(21) Anmeldenummer: 20190289.7
(22) Anmeldetag: 10.08.2020
(51) Int. Cl.: G05B 19/4093

(54) **BETRIEBSVERFAHREN FÜR EINE WERKZEUGMASCHINE, COMPUTERPROGRAMMPRODUKT, STEUEREINHEIT UND WERKZEUGMASCHINE**

(71) Anmelder: Siemens Aktiengesellschaft, 80333 München (DE)
(72) Erfinder: Bretschneider, Jochen, 88696 Owingen (DE)

(57) **Zusammenfassung**

Die Erfindung betrifft ein Verfahren (100) zum Betrieb einer Werkzeugmaschine (50), das mehre Schritte umfasst. In einem ersten Schritt (110) erfolgt ein Bereitstellen eines Steuerbefehlssatzes (12) für ein Werkzeug (10). In einem zweiten Schritt (120) erfolgt ein Bereitstellen einer Ist-Kontur (22) des Werkstücks (20). Ebenso umfasst das Verfahren (100) einen dritten Schritt (130), in dem ein Ermitteln eines ersten Materialeintrittspunkts (31) des Werkzeugs (10) in das Werkstück (20) durchgeführt wird. Es folgt ein vierter Schritt (140), in dem ein erster Positionierungsbefehls (32) zu einem Anfahren des ersten Materialeintrittspunkts (31) erzeugt wird. Erfindungsgemäß wird durch den ersten Positionierungsbefehl (32) eine Bahnlinie (15) vorgegeben, die von einer Bahnlinie (15) abweicht die durch den Steuerbefehlssatz (12) vorgegeben ist. Alternativ oder ergänzend wird durch den ersten Positionierungsbefehl (32) eine Eilgangbewegung (18) des Werkzeugs (10) und/oder einer Einspannung (52) des Werkstücks (20) vorgegeben. Die Erfindung betrifft auch ein Computerprogrammprodukt (70), das zum Durchführen des Verfahrens (100) ausgebildet ist, und eine Steuereinheit (40), die zur Umsetzung des Verfahrens (100) ausgebildet ist. Ferner betrifft die Erfindung eine Werkzeugmaschine (50), die zur Durchführung des Verfahrens (100) ausgebildet ist.

## Beschreibung

Die Erfindung betrifft ein Verfahren zum Betrieb einer Werkzeugmaschine und ein Computerprogrammprodukt zum Umsetzen des Verfahrens. Die Erfindung betrifft ebenso eine Steuereinheit, die zum Durchführen eines solchen Verfahrens ausgebildet ist und eine Werkzeugmaschine, die über eine derartige Steuereinheit verfügt.

Aus der Offenlegungsschrift DE 10 2018 002 660 A1 ist ein Informationsprozessor bekannt, der dazu ausgebildet ist, eine Bewegung eines Werkzeugs auf Grundlage eines Bearbeitungsprogramms zu simulieren. Der Informationsprozessor ist mit einer Luftschnittweg-Bestimmungseinheit versehen, durch den Luftschnitte bei einer Bearbeitung eines Werkstücks identifizierbar sind.

Das Dokument DE 33 48 159 C2 offenbart ein Steuersystem für eine Werkzeugmaschine, das dazu ausgebildet ist, ein Werkstück mit einem Werkzeug mit einer erhöhten Verfahrgeschwindigkeit anzufahren. Ein Kontakt mit dem Werkstück wird durch ein Erkennen eines Anstiegs einer Leistungsaufnahme eines Antriebs erfasst. Wenn ein Kontakt mit dem Werkstück erfasst wird, wird eine Verringerung der Verfahrgeschwindigkeit vorgegeben.

Bei der maschinellen spanenden Bearbeitung von Werkstücken wird eine schnelle, verschleißarme und kosteneffiziente Durchführung der Bearbeitung angestrebt. Insbesondere bei Werkzeugmaschinen wie Mehrachsfräsen besteht die Zielsetzung, nicht-produktive Maschinenbewegungen, sogenannte Nebenzeitbewegungen, zu verringern. Gleichzeitig wird eine präzise und prozesssichere Werkstückbearbeitung gefordert. Der Erfindung liegt die Aufgabenstellung zugrunde, eine Möglichkeit bereitzustellen, die in wenigstens einer der skizzierten Anforderungen eine Verbesserung bietet.

Die Aufgabenstellung wird durch ein erfindungsgemäßes Verfahren zum Betrieb einer Werkzeugmaschine gelöst, die dazu ausgebildet ist, ein Werkstück zu bearbeiten. Die Werkzeugmaschine umfasst dazu zumindest ein Werkzeug, das durch zumindest ein Antriebsmittel beweglich ist, um eine spanende Bearbeitung am Werkstück durchzuführen. Das Werkzeug ist durch Steuerbefehle beweglich, die zu einem Steuerbefehlssatz gehören können. In einem ersten Schritt erfolgt ein Bereitstellen eines Steuerbefehlssatzes für das Werkzeug. Der Steuerbefehlssatz umfasst eine Mehrzahl an Steuerbefehlen, die in einer Sequenz ausgebbar und umsetzbar sind, so dass eine Bahnlinie durch das Werkzeug abfahrbar ist. Der Steuerbefehlssatz ist dazu ausgebildet, dass im Zuge der spanenden Bearbeitung des Werkstücks dieses auf eine angestrebte Kontur zerspant wird. In einem zweiten Schritt erfolgt ein Bereitstellen einer Ist-Kontur des Werkstücks. Dabei kann die Ist-Kontur das gesamte Werkstück abbilden oder zumindest einen Bereich, der durch die Werkzeugmaschine zu bearbeiten ist. Die Ist-Kontur des Werkstücks wird hierbei in Form von Daten bereitgestellt, die in Kombination mit dem Steuerbefehlssatz beispielsweise durch eine Steuereinheit der Werkzeugmaschine auswertbar ist. Das Verfahren umfasst weiter einen dritten Schritt, in dem ein erster Materialeintrittspunkt des Werkzeugs in das Werkstück ermitteln wird. Unter einem Materialeintrittspunkt ist hierbei eine Position zu verstehen, an der bei einem Ablauf, also einem sequentiellen Ausführen, des Steuerbefehlssatzes das bei Werkzeug mit dem Werkstück in Kontakt tritt und eine spanende Bearbeitung des Werkstücks aufnimmt. Um den ersten Materialeintrittspunkt zu ermitteln, erfolgt eine Berechnung, beispielsweise durch eine Simulation, die auf der Ist-Kontur des Werkstücks und dem Steuerbefehlssatz basiert. Aus der Ermittlung des ersten Materialeintrittspunkts ergibt sich komplementär ein Abschnitt auf einer vom Steuerbefehlssatz vorgegebenen Bahnlinie, die frei von einer spanenden Bearbeitung ist. Derartige Abschnitte werden auch als Luftschnitte bezeichnet. Es folgt ein vierter Schritt, in dem beispielsweise durch die Steuereinheit selbsttätig ein erster Positionierungsbefehl berechnet wird, durch den der erste Materialeintrittspunkt mit dem Werkzeug angefahren wird.

Erfindungsgemäß wird durch den ersten Positionierungsbefehl für das Werkzeug, insbesondere dessen Werkzeugreferenzpunkt, eine Bahnlinie vorgegeben, die von der Bahnlinie abweicht, die ursprünglich durch den Steuerbefehlssatz vorgegeben ist. Der erste Positionierungsbefehl ist dazu ausgebildet, über den Steuerbefehlssatz zu dominieren und zumindest teilweise im Ablauf den Steuerbefehlssatz zu ersetzen. Der erste Positionierungsbefehl fügt somit in den Steuerbefehlssatz eine Abkürzung in die darin vorgegebene Bahnlinie ein. Dies erlaubt es, eine Länge eines Luftschnitts des Werkzeugs zu verringern und so die Bearbeitung des Werkstücks zu beschleunigen. Alternativ oder ergänzend kann durch den ersten Positionierungsbefehl eine Eilgangbewegung des Werkzeugs und/oder einer Einspannung des Werkstücks vorgegeben werden. Unter einer Eilgangbewegung ist eine Bewegung des Werkzeugs zu verstehen, die höher ist als eine Vorschubgeschwindigkeit, mit der ein Werkstück spanend bearbeitbar ist. Durch die Eilgangbewegung wird der erste Materialeintrittspunkt zeitsparend erreicht und die Bearbeitungszeit des Werkstücks verkürzt. Das Anfahren des ersten Materialeintrittspunkts auf einer abweichenden Bahnlinie, die als Abkürzung dient, und das Anfahren in Form einer Eilgangbewegung sind kombinierbar, wodurch eine erhöhte Zeitersparnis erzielt wird. Der erste Materialeintrittpunkt wird dabei mit der Geschwindigkeit und Drehzahl des Werkzeugs angefahren, welche bei der Abarbeitung des ursprünglichen Steuerbefehlssatzes entstanden wäre. Das erfindungsgemäße Verfahren kommt ohne zusätzliche Sensorik aus und ist daher in einfacher und kosteneffizienter Weise umsetzbar. Ferner lässt sich das Verfahren über den Steuerbefehlssatz durch den Anwender programmieren, also beispielsweise ein Ein-/Ausschalten oder einen Arbeitsmodus festlegen. Das Erfassen der Ist-Kontur ist schnell und präzise in einem Fertigungsumfeld unabhängig von der Steuereinheit durchführbar.

Die Steuereinheit nimmt dabei lediglich die Ergebnisse dieser Erfassung entgegen. Alternativ kann das Erfassen der Ist-Kontur in die Steuereinheit integriert sein. Das in die Steuereinheit integrierte Verfahren ist daher dazu geeignet, künftige Verbesserungen bei der Erfassung von Ist-Konturen von Werkstücken, beispielsweise bei 3D-Scanner oder computergestützter Bildverarbeitung, zu nutzen. Das erfindungsgemäße Verfahren bietet insgesamt eine Reduzierung der Bearbeitungszeit bei der spanenden Bearbeitung von Werkstücken und hilft die Wirtschaftlichkeit zu erhöhen.

In einer Ausführungsform des beanspruchten Verfahrens wird die Ist-Kontur des Werkstücks durch ein Erfassen des Werkstücks bereitgestellt. Das Erfassen wird beispielsweise mittels eines 3D-Scanners und/oder einer Kamera durchgeführt, die mit einer Bildauswertungseinheit verbunden ist. Alternativ oder ergänzend kann die Ist-Kontur mit einer Lasermessvorrichtung, einem Ultraschallsensor oder einer Röntgenvorrichtung erfasst werden. Das beanspruchte Verfahren ist folglich in eine Vielzahl an bestehenden Fertigungsketten integrierbar, die unterschiedliche Vorrichtungen aufweisen, die dazu geeignet sind, die Ist-Kontur des Werkstücks zu erfassen. Infolgedessen weist das beanspruchte Verfahren ein hohes Maß an Flexibilität auf.

Des Weiteren kann im beanspruchten Verfahren der dritte Schritt, in dem der erste Materialeintrittspunkt ermittelt wird, mittels einer Kollisionsvermeidungseinheit der Werkzeugmaschine durchgeführt werden. Die Kollisionsvermeidungseinheit kann dazu beispielsweise als ein Softwaremodul ausgebildet sein, das dazu ausgebildet ist, bevorstehende Kollisionen zwischen Objekten, beispielsweise dem Werkzeug und stillstehenden Objekten wie dem Werkstück oder der Umgebung zu erkennen. Derartige Kollisionsvermeidungseinheiten sind in einer Vielzahl an Werkzeugmaschinen ohnehin vorhanden und erlauben eine zuverlässige und genaue Prognose einer bevorstehenden Kollision des Werkzeugs oder von Maschinenkomponenten. Die Kollisionsvermeidungseinheit verfügt dazu über Daten, die die Form, Größe und Lage des Werkzeugs sowie der relevanten Maschinenkörper wie Maschinenachsen, Spindel, Abdeckungen, Maschinentisch, Werkstückspannsysteme beschreiben. Wird die Kollisionsvermeidungseinrichtung zur Berechnung eines ersten Materialeintrittspunktes verwendet, so werden die Daten der Ist-kontur des Werkstücks dem Kollisionsvermeidungseinheit bereitgestellt. Das beanspruchte Verfahren greift daher auf Komponenten zurück, die bereits in Werkzeugmaschinen vorhanden sind, und ist deshalb kosteneffizient und schnell implementierbar. Des Weiteren sind Kollisionsvermeidungseinheiten typischerweise derart ausgebildet, dass bei einer Erkennung einer unerwarteten Kollision die Bewegung des Werkzeugs und/oder einer Einspannung des Werkstücks sicher gestoppt werden kann. Die Nutzung der Kollisionsvermeidungseinheit macht das vorgeschlagene Verfahren insgesamt noch effizienter, da von der Steuereinheit selbsttätig berechnete, abkürzende Werkzeugwege auf Kollisionsfreiheit geprüft werden können.

Ferner kann das beanspruchte Verfahren weitere Schritte aufweisen, durch die die oben skizzierten technischen Vorteile weiter ausschöpfbar sind. In einem fünften Schritt kann ein Ermitteln eines ersten Materialaustrittspunkts erfolgen. Der erste Materialaustrittspunkt stellt, korrespondierend zum ersten Materialeintrittspunkt, das Werkzeug den Kontakt mit dem Werkstück verliert und wieder ein sogenannter Luftschnitt vorliegt. Im fünften Schritt wird auch ein zweiter Materialeintrittspunkt ermittelt, der bei einem Bewegen des Werkzeugs gemäß dem Steuerbefehlssatz auf den ersten Materialaustrittspunkt folgt. Im zweiten Materialeintrittspunkt tritt das Werkzeug nach einem sogenannten Luftschnitt wieder in Kontakt mit dem Werkstück. Es folgt ein sechster Schritt, in dem ein zweiter Positionierungsbefehl erzeugt wird. Der zweite Positionierungsbefehl ist dazu ausgebildet, das Werkzeug im Wesentlichen vom ersten Materialaustrittspunkt zum zweiten Materialeintrittspunkt zu verfahren. Der zweite Positionierungsbefehl kann dabei analog dem ersten Positionierungsbefehl dazu ausgebildet sein, für das Werkzeug eine Bahnlinie vorzugeben, die von der vom Steuerbefehlssatz vorgegebenen Bahnlinie abweicht. Alternativ oder ergänzend kann der zweite Positionierungsbefehl auch dazu ausgebildet sein, eine Eilgangbewegung des Werkzeugs vorzugeben, insbesondere für die Bewegung vom ersten Materialaustrittspunkt zum zweiten Materialeintrittspunkt. Korrespondierend zum ersten Positionierungsbefehl ist dessen Funktionsprinzip auf weitere Luftschnitte, die während der spanenden Bearbeitung des Werkstücks auftreten können, übertragbar. Dadurch wird nicht nur zu Beginn der spanenden Bearbeitung des Werkstücks eine Zeitersparnis erzielt, sondern auch währenddessen. Der fünfte und sechste Schritt können analog auch auf weitere Materialeintrittspunkte angewandt werden, die bei einer spanenden Bearbeitung des Werkstücks anzufahren sind. Dementsprechend sind der fünfte und sechste Schritt, in Abhängigkeit vom Werkstück, beliebig oft wiederholbar. Die technischen Vorteile des beanspruchten Verfahrens werden so weiter gesteigert.

In einer weiteren Ausführungsform des beanspruchten Verfahrens kann der Steuerbefehlssatz zur Herstellung eines angestrebten Fertigteils basierend auf einer Maximalkontur eines Werkstückrohlings, also eines Werkstücks in einem Ausgangszustand mit maximalem Aufmaß, ausgebildet sein. Die Maximalkontur stellt die für die spanende Bearbeitung größte vorliegende zulässige oder zu erwartende Größe des Werkstückrohlings dar. Folglich stellt der Werkstückrohling einen Ausgangspunkt für die Bearbeitung des Werkstücks dar. Dementsprechend beginnt die Bahnlinie, die durch den Steuerbefehlssatz vorgegeben wird, für das Werkzeug außerhalb der Maximalkontur und gewährleistet, dass das beanspruchte Verfahren kollisionsfrei startet. Infolgedessen weist der Steuerbefehlssatz einen Abschnitt in seiner vorgegebenen Bahnlinie auf, der bei einem Werkstückrohling, der kleiner ist als die Maximalkontur, durch den ersten Positionierungsbefehl einsparbar ist und/oder mit einer Eilgangbewegung durchquerbar ist. Eine derartige Maximalkontur ist beispielsweise aus Konstruktionsdaten des Werkstücks, insbesondere CAD-Daten, in einfacher Weise ableitbar, beispielweise durch Hinzufügen eines maximal erlaubten Aufmaßes. Folglich ist das beanspruchte Verfahren zuverlässig durchführbar.

Ferner kann die Ist-Kontur des Werkstücks während der spanenden Bearbeitung des Werkstücks wiederholt erfasst werden, so dass der vom Werkzeug hervorgerufene Materialabtrag am Werkstück erkannt wird. Dies erlaubt es, der Form bzw. vorliegende Kontur des Werkstücks während der spanenden Bearbeitung aktuell zu erkennen und für eine wiederholte Durchführung des beanspruchten Verfahrens zu berücksichtigen. Beispielsweise kann eine Bearbeitung des Werkstücks in einem ersten Bereich zu einer Veränderung der Ist-Kontur führen, die bei der weiteren Bearbeitung mit dem Steuerbefehlssatz zu einem weiteren Luftschnitt führt, der ebenfalls mittels des beanspruchten Verfahrens verkürzt werden kann. Das Erfassen kann dabei analog dem Erfassen im zweiten Schritt erfolgen. Alternativ oder ergänzend kann die Ist-Kontur auch erfasst werden, indem die spanende Bearbeitung, und der damit einhergehende Materialabtrag am Werkstück, beispielsweis von der Steuereinheit simuliert werden. Zahlreiche heute verfügbare Steuereinheiten erlauben es, in einfacher Weise, den Materialabtrag am Werkstück zuverlässig zu simulieren. Das beanspruchte Verfahren ist dadurch für eine dynamische Bearbeitungssituation geeignet. Dementsprechend ist das beanspruchte Verfahren dazu geeignet, selbsttätig bei jeder Bearbeitungssituation durchgeführt zu werden, die dafür geeignet ist. Dadurch werden die Vorteile des beanspruchten Verfahrens in besonderem Umfang erreicht.

In einer weiteren Ausführungsform des beanspruchten Verfahrens kann der erste und/oder zweite Materialeintrittspunkt mit einem einstellbaren Sicherheitsabstand angefahren werden. Der Sicherheitsabstand dient dazu in einem definierten Abstand zum Werkstück auf die ursprüngliche Bahnlinie aufzufahren und vor allem die für die Bearbeitung mit dem Werkzeug notwendige Geschwindigkeit und Drehzahl des Zerspanprozesses vor dem Eintritt ins Material, also ins Werkstück, herzustellen. So können Beschädigung durch das Anschlagen eines inaktiven, also nicht rotierenden, Werkzeugs am Werkstück vermieden werden, oder beispielsweise auch ein Anlaufen eines Fräsers unter Kontakt mit dem Werkstück. Das Einstellen des Sicherheitsabstands kann beispielsweise über eine Benutzereingabe erfolgen, über eine typenspezifische feste Vorgabe, oder über eine selbsttätige Berechnung der Steuereinheit der Werkzeugmaschine vorgegeben werden. Das beanspruchte Verfahren weist dadurch ein breites Einsatzspektrum auf.

Darüber hinaus kann das beanspruchte Verfahren im dritten Schritt, in dem der erste Materialeintrittspunkt ermittelt wird, und/oder im vierten Schritt, in dem der erste Positionierungsbefehl erzeugt wird, eine Lage und/oder Ausrichtung des Werkstücks berücksichtigt. Beispielsweise kann nur ein Bereich der Ist-Kontur in die Durchführung des dritten und/oder vierten Schritts einbezogen werden, der für das Werkzeug zugänglich ist oder der der spanenden Bearbeitung zu unterziehen ist. Dadurch ist der Rechenaufwand reduzierbar und gleichzeitig eine präzise Durchführung des beanspruchten Verfahrens möglich.

In einer weiteren Ausführungsform des beanspruchten Verfahrens kann dieses in Echtzeit durchgeführt werden. Dazu ist das Verfahren in einen Fertigungsvorgang integriert und vermeidet so zusätzlichen Stillstand des Werkzeugs. Insbesondere kann das Verfahren durchgeführt werden, um den ersten Positionierungsbefehl zu erzeugen und unmittelbar danach basierend darauf der erste Materialeintrittspunkt angefahren werden. Währenddessen oder beim Erreichen des ersten Materialaustrittspunkts wird das in Echtzeit ablaufende Verfahren dann durchgeführt, um den zweiten Positionierungsbefehl zum Anfahren des zweiten Materialeintrittspunkts zu ermitteln. Ergänzend kann das Werkstück, also dessen Ist-Kontur, zwischen dem Erreichen des ersten Materialeintrittpunkts und dem Erreichen des ersten Materialaustrittspunkts zumindest einmal im Sinne des zweiten Schritts erfasst werden.

Des Weiteren kann die Bahnlinie, die für das Werkzeug durch den ersten und/oder zweiten Positionierungsbefehl vorgegeben wird, mittels der Kollisionsvermeidungseinheit der Werkzeugmaschine geprüft werden. Wenn Kollisionsfreiheit für die jeweilige Bahnlinie festgestellt wird, wird diese vom Werkzeug abgefahren. Andernfalls wird der ersten und/oder zweite Positionierungsbefehl unterdrückt und stattdessen ein Abfahren der Bahnlinie eingeleitet, die dem Steuerbefehlssatz entspricht. Alternativ oder ergänzend kann beispielsweise basierende auf der Ist-Kontur des Werkstücks mittels der Steuereinheit ein kollisionsfreier erster und/oder zweiter Positionierungsbefehl ermittelt werden. Der erste und/oder zweite Positionierungsbefehl können eine beliebig geformte Bahnlinie hervorrufen, die nicht auf geradlinige Bestandteile beschränkt ist. Hierdurch wird die Sicherheit des beanspruchten Verfahrens in einfacher Weise durch Verwendung einer vorhandenen Komponente, also der Kollisionsvermeidungseinheit, gesteigert.

In einer weiteren Ausführungsform des beanspruchten Verfahrens erfolgt der zweite Schritt, in dem die Ist-Kontur des Werkstücks erfasst wird, in einem in der Werkzeugmaschine eingespannten Zustand. Im eingespannten Zustand ist insbesondere die Lage und/oder Ausrichtung des Werkstücks erfassbar, und dementsprechend der erste Materialeintrittspunkt exakt anfahrbar. Alternativ oder ergänzend kann die Ist-Kontur des Werkstücks außerhalb der Werkzeugmaschine erfasst werden. Dies erlaubt den Einsatz von baulich großen und leistungsfähigen Erfassungsmitteln wie 3D-Scannern, Laser-Abtastvorrichtungen, Röntgenvorrichtungen, Computertomographen, und ähnlichem. Dementsprechend präzise kann das beanspruchte Verfahren umgesetzt werden. Die Erfassung von Ist-Konturen von Werkstücken ist Teil von unterschiedlichen Fertigungsverfahren, so dass das beanspruchte Verfahren in zahlreichen Anwendungsfällen ohne gesteigerten Aufwand implementierbar ist. Das Konzept einer digitalen Fertigung wird auf diesem Wege konsequenter verwirklicht.

Ferner können im beanspruchten Verfahren der Steuerbefehlssatz, der erste und/oder zweite Positionierungsbefehl als G-Code ausgebildet sein. G-Code ist eine standardisierte Codierung zur Ansteuerung von Werkzeugmaschinen, der nahezu universell auf allen Werkzeugmaschinen einsetzbar ist. G-Code ist ohne weitergehenden Interpretationsaufwand direkt ausführbar und ist speicherplatzsparend. Folglich ist das beanspruchte Verfahren auch auf bestehenden Werkzeugmaschinen mit reduzierter Rechenleistung umsetzbar, was wiederum ein breites mögliches Verwendungsspektrum bietet. Der Positionierungsbefehl wird von der Steuereinheit selbsttätig berechnet und das Berechnungsergebnis kann als G-Code ausgeführt sein. Alternativ kann das Berechnungsergebnis ohne den Umweg des G-Codes direkt von der Steuereinheit intern verrechnet werden.

In einer weiteren Ausführungsform des beanspruchten Verfahrens können der erste und/oder zweite Positionierungsbefehl derart ausgebildet sein, dass diese unmittelbar von der Steuereinheit in Verfahrbewegungen des Werkzeugs umsetzbar sind. Bei der Erzeugung des ersten und/oder zweiten Positionierungsbefehl werden höhere Codierungen wie G-Code vermieden. Dadurch ist der erforderliche Rechenaufwand reduziert, was wiederum eine Durchführung des Verfahrens in Echtzeit vereinfacht. Ebenso ist ein korrespondierender Interpreter, wie beispielsweise ein G-Code-Interpreter, entbehrlich.

Die zugrundeliegende Aufgabenstellung wird auch durch ein erfindungsgemäßes Computerprogrammprodukt gelöst, das dazu ausgebildet ist, Steuerbefehle an eine Werkzeugmaschine auszugeben. Das Computerprogrammprodukt verfügt über eine Datenschnittstelle, über die Daten einer Ist-Kontur eines Werkstücks empfangbar sind. Die Daten der Ist-Kontur des Werkstücks sind in Kombination mit einem Steuerbefehlssatz verarbeitbar. Insbesondere ist das Computerprogrammprodukt dazu geeignet, eine Bewegung eines Werkzeugs der Werkzeugmaschine zu berechnen und/oder zu simulieren, die durch den Steuerbefehlssatz hervorrufbar ist. Erfindungsgemäß ist das Computerprogrammprodukt dazu ausgebildet, zumindest eine Ausführungsform der oben skizzierten Verfahren umzusetzen und so eine spanende Bearbeitung des Werkstücks zu steuern. Das Computerprogrammprodukt kann vollständig in Software umgesetzt sein, oder festverdrahtet ausgebildet sein, beispielsweise als Chip, Integrierte Schaltung, Mikrocontroller, FPGA oder ähnlichem. Ebenso kann das Computerprogrammprodukt auch als Kombination aus Software und einer festverdrahteten Form ausgebildet sein. Das Computerprogrammprodukt kann ferner monolithisch ausgebildet sein, also sämtliche funktionswesentlichen Komponenten umfassen. Alternativ kann das Computerprogrammprodukt modular ausgebildet sein, also aus Teilprogrammen zusammengesetzt, die auf unterschiedlichen Hardwareplattformen ausführbar sind und in kommunikativer Datenverbindung zueinander die der Erfindung zugrundeliegende Funktionsweise bereitstellen. Beispielsweise kann das Computerprogrammprodukt ein Teilprogramm umfassen, das zumindest eine Funktion auf einem Zentralrechner oder einer Computer-Cloud bereitstellt. Ebenso kann das Computerprogrammprodukt als Teil einer Simulationsumgebung der Werkzeugmaschine ausgebildet sein, beispielsweise also sogenannter Digital Zwilling.

Ebenso wird die Aufgabenstellung durch eine erfindungsgemäße Steuereinheit für eine Werkzeugmaschine gelöst. Die Steuereinheit umfasst eine Recheneinheit und eine Speichereinheit, die dazu ausgebildet sind, ein Computerprogrammprodukt auszuführen, wobei durch Abarbeitung, also Interpretation, des Steuerbefehlssatzes Steuerbefehle für die Werkzeugmaschine erzeugbar sind. Der Steuerbefehlssatz kann von einem Benutzer, beispielsweise als NC Programm, bereitgestellt sein. Erfindungsgemäß ist die Steuereinheit dazu ausgebildet, zumindest eine Ausführungsform der oben skizzierten Verfahren umzusetzen. Dazu kann die Steuereinheit beispielsweise mit einer Ausführungsform des beanspruchten Computerprogrammprodukts ausgestattet sein.

Die eingangs beschriebene Aufgabe wird auch durch eine erfindungsgemäße Werkzeugmaschine gelöst, die ein Werkzeug umfasst, das zu einem spanenden Bearbeiten eines Werkstücks geeignet ist. Das Werkzeug ist durch zumindest ein Antriebsmittel beweglich, das durch Steuerbefehle ansteuerbar ist, die von einer Steuereinheit erzeugt werden. Erfindungsgemäß ist die Steuereinheit nach einer der oben dargestellten Ausführungsformen ausgebildet.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: eine erste Ausführungsform des beanspruchten Verfahrens;
- FIG 2: eine zweite Ausführungsform des beanspruchten Verfahrens;
- FIG 3: schematisch einen Ablauf einer dritten Ausführungsform des beanspruchten Verfahrens;
- FIG 4: den Aufbau einer Ausführungsform der beanspruchten Werkzeugmaschine.

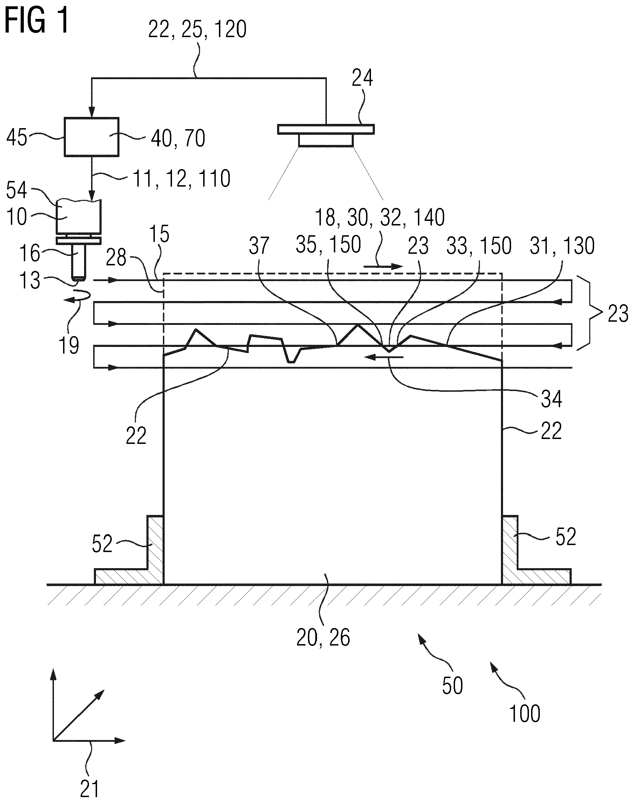

In FIG 1 ist schematisch eine erste Ausführungsform des beanspruchten Verfahrens 100 dargestellt, das in einer nicht näher gezeigten Werkzeugmaschine 50 umgesetzt ist. In einer Einspannung 52 der Werkzeugmaschine 50 ist ein Werkstück 20 eingespannt, das anfangs als Rohling 26 vorliegt und mittels eines Werkzeugs 10 spanend zu bearbeiten ist. Die Werkzeugmaschine 50 verfügt über eine Steuereinheit 40, die dazu ausgebildet ist, Steuerbefehle 11 an Antriebsmittel 54 der Werkzeugmaschine 50 auszugeben, die zu einem Steuerbefehlssatz 12 gehören, durch den die angestrebte spanende Bearbeitung des Werkstücks 20 definiert ist. Durch einen Steuerbefehlssatz 12 ist zur Bearbeitung des Werkstücks 20 eine Bahnlinie 15 vorgebbar, durch die die spanende Bearbeitung vorgegeben wird. In einem ersten Schritt 110 des Verfahrens 100 wird der Steuerbefehlssatz 12 bereitgestellt. In einem zweiten Schritt 120, der vor, während oder nach dem ersten Schritt 110 durchführbar ist, erfolgt ein Erfassen einer Ist-Kontur 22 des Werkstücks 20 durch ein Erfassungsmittel 24, das als 3D-Scanner ausgebildet ist. Die Ist-Kontur 22 wird durch Daten 25 wiedergegeben, die durch das Erfassungsmittel 24 erzeugt werden und an die Steuereinheit 40 übertragen werden. In einem dritten Schritt 130 werden die Ist-Kontur 22 und der Steuerbefehlssatz 12 in Form einer Berechnung, beispielsweise einer Simulation, durch die Steuereinheit 40 ausgewertet. Es wird ein Abfahren der Bahnlinie 15 simuliert, die durch den Steuerbefehlssatz 12 vorgegeben ist und dabei eine erstmalige Kollision zwischen dem Werkzeug 10 und dem Werkstück 20 ermittelt. Die Berechnung ist dabei auf einen Referenzpunkt 13 des Werkzeugs 10 bezogen. Ebenso wird eine Lage und Ausrichtung des Werkstücks 20 berücksichtigt, was in FIG 1 durch das Koordinatenkreuz 21 versinnbildlicht ist. Der Ort der so ermittelten erstmaligen Kollision stellt den ersten Materialeintrittspunkt 31 dar, der so im dritten Schritt 130 ermittelt wird. Dazu wird eine Kollisionsvermeidungseinheit 45 der Steuereinheit 40 eingesetzt.

In einem darauffolgenden vierten Schritt 140 erfolgt ein Ermitteln, Erzeugen und Ausgeben eines Positionierungsbefehls 30, der dominant gegenüber der Vorgabe des Steuerbefehlssatzes 12 ist. Im Einzelnen wird ein erster Positionierungsbefehl 32 im vierten Schritt 140 erzeugt, durch den das Werkzeug 10 weiter die vom Steuerbefehlssatz 12 vorgegebene Bahnlinie 15 abfährt. Zusätzlich wird durch den ersten Positionierungsbefehl 32 für das Werkzeug 10 eine Eilgangbewegung 18 vorgegeben. Bei der Eilgangbewegung 18 weist das Werkzeug 10 einer gegenüber einer spanenden Bearbeitung erhöhte Geschwindigkeit auf. Die Eilgangbewegung 18 wird dabei bis zum Erreichen des ersten Materialeintrittspunkts 31 durchgeführt. Während der Eilgangbewegung 18 oder bei Erreichen des ersten Materialeintrittspunkts 31 kann eine Drehbewegung 19 des Werkzeugs 10, das als Fräser 16 ausgebildet ist, eingeleitet werden. Dabei werden zu Beginn des Zerspanvorgangs die im ursprünglichen Steuerbefehlssatz vorgegebenen Zerspanbedingungen hergestellt. Der Steuerbefehlssatz 12 ist darauf ausgelegt, dass für das Werkstück 20 eine Maximalkontur 28 zulässig ist, die von der Ist-Kontur 22, wie in FIG 1 gezeigt, jedoch nicht erreicht wird. Dementsprechend ist ein Abschnitt der Bahnlinie 15, die durch den Steuerbefehlssatz 12 als Luftschnitt 23 ausgebildet. Der im vierten Schritt 140 erzeugt erste Positionierungsbefehl 32 erlaubt es, somit im Bereich des Luftschnitts 23 das Werkzeug 10 mit erhöhter Geschwindigkeit zu bewegen und den ersten Materialeintrittspunkt 31 zeitsparend anzufahren. Ein Erhöhen der Geschwindigkeit des Werkzeugs 10 erfordert nur einen minimalen Eingriff in den Steuerungsablauf der Steuereinheit 40 und ist deshalb mit minimalem Rechenaufwand umsetzbar.

Im weiteren Ablauf des Verfahrens 100 erfolgt in einem fünften Schritt 150 ein Ermitteln eines ersten Materialaustrittspunkts 33, der beim Abfahren der Bahnlinie 15 auf den ersten Materialeintrittspunkt 31 folgt. Ebenso wird im fünften Schritt 150 ein zweiter Materialeintrittspunkt 35 ermittelt. Zwischen dem ersten Materialaustrittspunkt 33 und dem zweiten Materialeintrittspunkt 35 liegt ein Luftschnitt 23, der so mit ermittelt wird. Es folgt ein sechster Schritt 160, in dem ein zweiter Positionierungsbefehl 34 erzeugt wird. Durch den zweiten Positionierungsbefehl 34 wird mit dem Werkzeug 10 ausgehend vom ersten Materialausgangspunkt 33 der zweite Materialaustrittspunkt 35 angefahren. Analog zum ersten Positionierungsbefehl 32, wird durch den zweiten Positionierungsbefehl 34 eine Eilgangbewegung 18 des Werkzeugs 10 vorgegeben. Der Luftschnitt 23, der zwischen dem ersten Materialaustrittspunkt 33 und dem zweiten Materialeintrittspunkt 35 liegt, wird so auch zeitsparend durchgeführt. Der fünfte und sechste Schritt 150, 160 sind im weiteren Verlauf des Verfahrens 100 für weitere Luftschnitte 23 während der spanenden Bearbeitung des Werkstücks 20 analog wiederholbar. Ebenso sind die Bahnlinien 15, die durch den ersten und/oder zweiten Positionierungsbefehl 32, 34 durch die Kollisionsvermeidungseinheit 45 auf Kollisionsfreiheit prüfbar. Das Verfahren 100 wird insgesamt durch ein Computerprogrammprodukt 70 umgesetzt, das auf der Steuereinheit 40 ausführbar gespeichert ist.

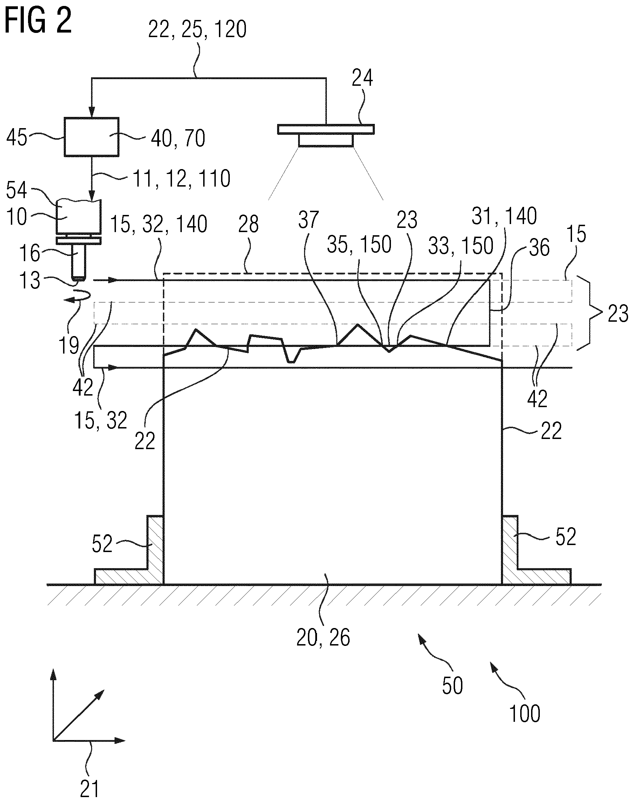

In FIG 2 ist schematisch eine zweite Ausführungsform des beanspruchten Verfahrens 100 dargestellt, das in einer nicht näher gezeigten Werkzeugmaschine 50 umgesetzt ist und mit dem Verfahren 100 nach FIG 1 kombinierbar ist. In einer Einspannung 52 der Werkzeugmaschine 50 ist ein Werkstück 20 eingespannt, das anfangs als Rohling 26 vorliegt und mittels eines Werkzeugs 10 spanend zu bearbeiten ist. Die Werkzeugmaschine 50 verfügt über eine Steuereinheit 40, die dazu ausgebildet ist, Steuerbefehle 11 auszugeben, die zu einem Steuerbefehlssatz 12 gehören können, durch den die angestrebte spanende Bearbeitung des Werkstücks 20 definiert ist. Durch einen Steuerbefehlssatz 12 ist zur Bearbeitung des Werkstücks 20 eine Bahnlinie 15 vorgebbar, durch die spanende Bearbeitung vorgegeben wird. In einem ersten Schritt 110 des Verfahrens 100 wird der Steuerbefehlssatz 12 bereitgestellt. In einem zweiten Schritt 120, der vor, während oder nach dem ersten Schritt 110 durchführbar ist, erfolgt ein Erfassen einer Ist-Kontur 22 des Werkstücks 20 durch ein Erfassungsmittel 24, das als 3D-Scanner ausgebildet ist. Die Ist-Kontur 22 wird durch Daten 25 wiedergegeben, die durch das Erfassungsmittel 24 erzeugt werden und an die Steuereinheit 40 übertragen werden. In einem dritten Schritt 130 werden die Ist-Kontur 22 und der Steuerbefehlssatz 12 in Form einer Berechnung, beispielsweise einer Simulation, durch die Steuereinheit 40 ausgewertet. Es wird ein Abfahren der Bahnlinie 15 simuliert, die durch den Steuerbefehlssatz 12 vorgegeben ist und dabei eine erstmalige Kollision zwischen dem Werkzeug 10 und dem Werkstück 20 ermittelt. Dazu wird eine Kollisionsvermeidungseinheit 45 der Steuereinheit 40 eingesetzt. Die Berechnung des ersten Materialeintrittpunktes 31 ist dabei auf einen Referenzpunkt 13 des Werkzeugs 10 bezogen. Ebenso wird eine Lage und Ausrichtung des Werkstücks 20 berücksichtigt, was in FIG 2 durch das Koordinatenkreuz 21 versinnbildlicht ist. Der Ort der so ermittelten erstmaligen Kollision stellt den ersten Materialeintrittspunkt 31 dar, der so im dritten Schritt 130 ermittelt wird.

In einem darauffolgenden vierten Schritt 140 erfolgt ein Ermitteln, Erzeugen und Ausgeben eines Positionierungsbefehls 30, der dominant gegenüber der Vorgabe des Steuerbefehlssatzes 12 ist. Im Einzelnen wird ein erster Positionierungsbefehl 32 im vierten Schritt 140 erzeugt, durch den das Werkzeug 10 von der vom Steuerbefehlssatz 12 vorgegebene Bahnlinie 15 abweicht. Durch den ersten Positionierungsbefehl 32 wird eine Bahnlinie 15 vorgegeben, die die ursprüngliche Bahnlinie 15 verlässt, um eine Abkürzung vorzunehmen. So wird durch den ersten Positionierungsbefehl 32 eine Bahnlinie 15 vorgegeben, die einen abkürzenden Querungsabschnitt 36 aufweist, und so eine Abkürzung für das Werkzeug 10 bildet. Optional kann, analog FIG 1, durch den ersten Positionierungsbefehl 32 für das Werkzeug 10 eine Eilgangbewegung 18 vorgegeben. Durch den ersten Positionierungsbefehl 32 ist für das Werkzeug 10 ein Abfahren des Querungsabschnitts 36 vorgebbar, was zu einem zeitsparenden Anfahren des ersten Materialeintrittspunkts 31 führt. Während des Abfahrens der vom ersten Positionierungsbefehl 32 vorgegebenen Bahnlinie 15 oder bei Erreichen des ersten Materialeintrittspunkts 31 kann eine Drehbewegung 19 des Werkzeugs 10, das als Fräser 16 ausgebildet ist, eingeleitet werden. Der Steuerbefehlssatz 12 ist darauf ausgelegt, dass für das Werkstück 20 eine Maximalkontur 28 zulässig ist, die von der Ist-Kontur 22, wie in FIG 1 gezeigt, jedoch nicht erreicht wird. Dementsprechend ist ein Abschnitt der Bahnlinie 15, die durch den Steuerbefehlssatz 12 als Luftschnitt 23 ausgebildet. Der im vierten Schritt 140 erzeugt erste Positionierungsbefehl 32 erlaubt es, somit im Bereich des Luftschnitts 23 das Werkzeug 10 entlang des Querungsabschnitts 36, also mit verkürzter Wegstrecke zu bewegen und so den ersten Materialeintrittspunkt 31 zeitsparend anzufahren. Die vom ersten Positionierungsbefehl 32 vorgegebene Bahnlinie 15 ist verfügt über eine reduzierte Anzahl an Wendepunkten 42 und/oder über eine kürzere Bahnlinie und wird von der Steuereinheit zum Zeitpunkt der Abarbeitung des Steuerbefehlssatzes 12 zeitgleich, also in Echtzeit, berechnet und bereitgestellt.

Im weiteren Ablauf des Verfahrens 100 erfolgt in einem fünften Schritt 150 ein Ermitteln eines ersten Materialaustrittspunkts 33, der beim Abfahren der Bahnlinie 15 auf den ersten Materialeintrittspunkt 31 folgt. Ebenso wird im fünften Schritt 150 ein zweiter Materialeintrittspunkt 35 ermittelt. Zwischen dem ersten Materialaustrittspunkt 33 und dem zweiten Materialeintrittspunkt 35 liegt ein Luftschnitt 23, der so mit ermittelt wird. Es folgt ein sechster Schritt 160, in dem ein zweiter Positionierungsbefehl 34 erzeugt wird. Durch den zweiten Positionierungsbefehl 34 wird mit dem Werkzeug 10 ausgehend vom ersten Materialausgangspunkt 33 der zweite Materialaustrittspunkt 35 angefahren. Analog zum ersten Positionierungsbefehl 32, wird durch den zweiten Positionierungsbefehl 34 eine Eilgangbewegung 18 des Werkzeugs 10 vorgegeben. Der Luftschnitt 23, der zwischen dem ersten Materialaustrittspunkt 33 und dem zweiten Materialeintrittspunkt 35 liegt, wird so auch zeitsparend durchgeführt. Der fünfte und sechste Schritt 150, 160 sind im weiteren Verlauf des Verfahrens 100 für weitere Luftschnitte 23 während der spanenden Bearbeitung des Werkstücks 20 analog wiederholbar. Ebenso sind die Bahnlinien 15, die durch den ersten und/oder zweiten Positionierungsbefehl 32, 34 durch die Kollisionsvermeidungseinheit 45 auf Kollisionsfreiheit prüfbar. Das Verfahren 100 wird insgesamt durch ein Computerprogrammprodukt 70 umgesetzt, das auf der Steuereinheit 40 ausführbar gespeichert ist.

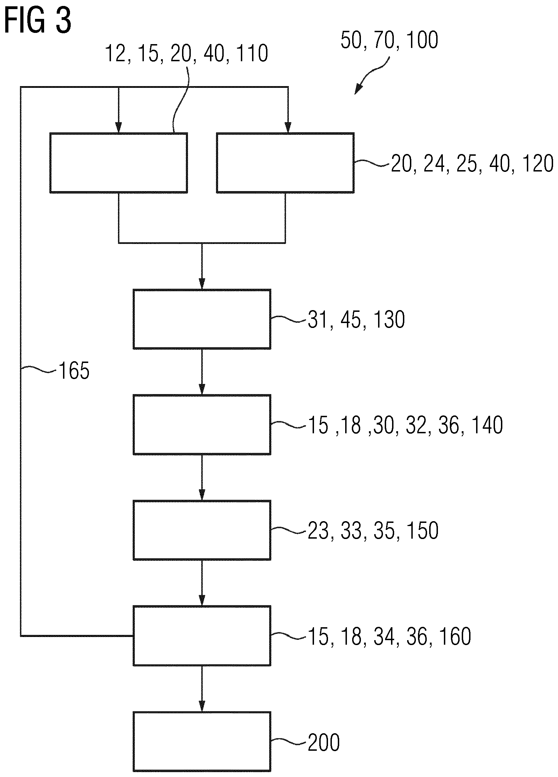

Ein Ablauf einer dritten Ausführungsform des beanspruchten Verfahrens 100 ist in FIG 3 schematisch abgebildet. Das Verfahren 100 wird für eine nicht näher dargestellte Werkzeugmaschine 50 durchgeführt. Das Verfahren 100 umfasst einen ersten und einen zweiten Schritt 110, 120, die im Wesentlichen gleichzeitig durchgeführt werden. Im ersten Schritt 110 erfolgt ein Bereitstellen von eines Steuerbefehlssatzes 12, durch den eine Bahnlinie 15 für eine angestrebte spanende Bearbeitung eines Werkstücks 20 vorgebbar ist. Der Steuerbefehlssatz 12 wird hierbei in einer Steuereinheit 40 der Werkzeugmaschine 50 bereitgestellt. Im zweiten Schritt 120 erfolgt ein Erfassen einer Ist-Kontur 22 des Werkstücks 20, die in Form von Daten 25 bereitgestellt wird. Die Ist-Kontur 22 bzw. die korrespondierenden Daten 25 werden dabei auch in der Steuereinheit 40 bereitgestellt.

Es folgt ein dritter Schritt 130, in dem eine Kollisionsvermeidungseinheit 45, eingesetzt wird, um basierend auf der Ist-Kontur 22 des Werkstücks 20 und dem Steuerbefehlssatz 12 einen ersten Materialeintrittspunkt 31 zu ermitteln. Der erste Materialeintrittspunkt 31 stellt die Position dar, an der ein Werkzeug 10, mit dem die spanende Bearbeitung des Werkstücks 20 durchzuführen ist, bei Abfahren der vom Steuerbefehlssatz 12 vorgegebenen Bahnlinie 15 erstmalig mit dem Werkstück 20 in Kontakt tritt. Darauf folgt ein vierter Schritt 140, in dem ein Positionierungsbefehl 30 erzeugt wird, der gegenüber dem Steuerbefehlssatz 12 dominant ist, ihn also zumindest teilweise ersetzen kann. Es wird ein erster Positionierungsbefehl 32 erzeugt, durch den für das Werkzeug 10 zum Anfahren des ersten Materialeintrittspunkts 31 eine Eilgangbewegung 18 vorgegeben wird. Ferner ist der erste Positionierungsbefehl 32 derart ausgebildet, dass die durch ihn vorgegebene Bahnlinie 15 des Werkzeugs 10 von der Bahnlinie 15 abweicht, die durch den Steuerbefehlssatz 12 vorgegeben ist. Durch den ersten Positionierungsbefehl 32 wird eine verkürzte Bahnlinie 15 mit einem Querungsabschnitt 36 vorgegeben, der eine Abkürzung für das Werkzeug 10 darstellt. Dementsprechend wird mit dem ersten Positionierungsbefehl 32 für das Werkzeug 10 bis zum Erreichen des ersten Materialeintrittspunkts 31 eine verkürzte Wegstrecke und eine erhöhte Geschwindigkeit vorgegeben und so eine Zeitersparnis erzielt.

Darauf folgt ein fünfter Schritt 150, in dem für das Werkzeug 10 ein erster Materialaustrittspunkt 33 ermittelt wird. Ebenso wird im fünften Schritt 150 ein zweiter Materialeintrittspunkt 35 für das Werkzeug 10 ermittelt. Daraus ergibt sich ein Luftschnitt 23 zwischen dem ersten Materialaustrittspunkt 31 und dem zweiten Materialeintrittspunkt 33. In einem anschließenden sechsten Schritt 160 erfolgt ein Ermitteln und Erzeugen eines zweiten Positionierungsbefehls 34, durch den für das Werkzeug 10 eine Bahnlinie 15 vorgegeben wird, mit der der Luftschnitt 23 zwischen dem ersten Materialaustrittspunkt 33 und dem zweiten Materialeintrittspunkt 35 zu durchfahren ist. Durch den zweiten Positionierungsbefehl 34 wird analog zum ersten Positionierungsbefehl 32 im vierten Schritt 140 eine Eilgangbewegung 18 des Werkzeugs 10 vorgegeben. Gleichermaßen analog zum ersten Positionierungsbefehl 32 wird durch den zweiten Positionierungsbefehl 34 für das Werkzeug 10 eine Bahnlinie 15 vorgegeben, die von der Bahnlinie 15 abweicht, die vom Steuerbefehlssatz 12 vorgegeben ist. Die Bahnlinie 15, die vom zweiten Positionierungsbefehl 34 vorgegeben ist, umfasst einen Querungsabschnitt 36, der für das Werkzeug 10 eine Abkürzung darstellt. Dementsprechend wird auch durch den zweiten Positionierungsbefehl 34 eine Beschleunigung der durchzuführenden spanenden Bearbeitung des Werkstücks 20 erzielt.

Die Schritte 110, 120, 130, 140, 150, 160 sind über eine Rückführschleife 165 wiederholbar durchführbar, so dass die damit erreichten technischen Vorteile für weitere Bereiche des Werkstücks 20 umsetzbar sind. In einem abschließenden siebten Schritt 170 wird die spanende Bearbeitung des Werkstücks 20 durch das Werkzeug 10 auf der Werkzeugmaschine 50 eingeleitet. Das Verfahren 100 wird mittels eines Computerprogrammprodukts 70 auf einer Steuereinheit 40 der Werkzeugmaschine 50 verwirklicht. Nach Durchführung des sechsten Schritts 160 erreicht das Verfahren 100 einen Endzustand 200.

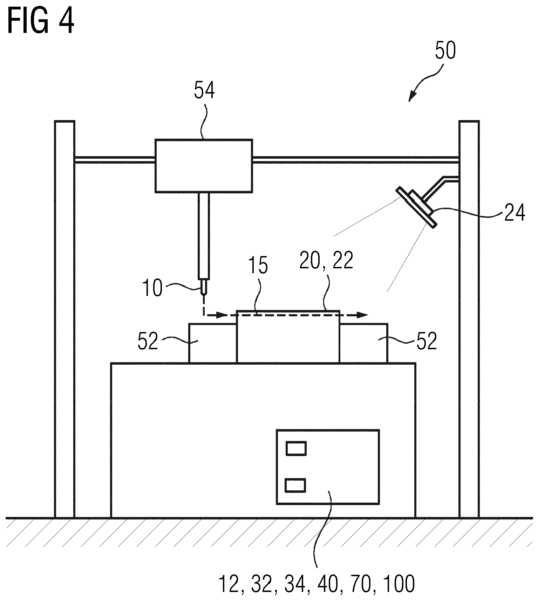

FIG 4 zeigt schematisch den Aufbau einer Ausführungsform der beanspruchten Werkzeugmaschine 50, die ein Werkzeug 10 umfasst, mit dem ein Werkstück 20 spanend bearbeitbar ist. Das Werkzeug 10 ist durch ein Antriebsmittel 54 beweglich. Das Werkstück 20 ist in einer Einspannung 52 der Werkzeugmaschine 50 lösbar eingespannt. Ferner ist das Werkstück 20 durch das Werkzeug 10 bei einem Abfahren einer Bahnlinie 15 spanend bearbeitbar, die durch einen Steuerbefehlssatz 15, einen ersten und/oder zweiten Positionierungsbefehl 32, 34 vorgebbar ist. Der Steuerbefehlssatz 12, der erste und/oder zweite Positionierungsbefehl 32, 34 sind durch ein Computerprogrammprodukt 70 vorgebbar, das auf einer Steuereinheit 40 der Werkzeugmaschine 50 ausführbar ist. Die Steuereinheit 40 weist eine Recheneinheit 43 und eine Speichereinheit 44 auf und ist dazu ausgebildet, zumindest eine Ausführungsform des oben beschriebenen Verfahrens 100 umzusetzen. Dazu ist die Werkzeugmaschine 50 mit einem Erfassungsmittel 24 versehen, durch das eine Ist-Kontur 22 des Werkstücks 20 erfassbar ist.

## Patentansprüche

1. Verfahren (100) zum Betrieb einer Werkzeugmaschine (50), umfassend die Schritte:
a) Bereitstellen eines Steuerbefehlssatzes (12) für;
b) Bereitstellen einer Ist-Kontur (22) eines Werkstücks (20) ;
c) Ermitteln eines ersten Materialeintrittspunkts (31) eines Werkzeugs (10) in das Werkstück (20);
d) Erzeugen eines ersten Positionierungsbefehls (32) zu einem Anfahren des ersten Materialeintrittspunkts (31);
wobei der erste Positionierungsbefehl (32) eine Bahnlinie (15) vorgibt, die von einer Bahnlinie (15) abweicht die durch den Steuerbefehlssatz (12) vorgegeben ist und/oder durch den ersten Positionierungsbefehl (32) eine Eilgangbewegung (18) des Werkzeugs (10) und/oder einer Einspannung des Werkstücks (20) vorgegeben wird.

2. Verfahren (100) nach Anspruch 1, **dadurch ge**- **kennzeichnet**, dass die Ist-Kontur (22) des Werkstücks (20) durch ein Erfassen des Werkstücks (20) hergestellt ist.

3. Verfahren (100) nach Anspruch 1 oder 2, **dadurch gekennzeichnet , dass** der Schritt c) mittels einer Kollisionsvermeidungseinheit (45) der Werkzeugmaschine (50) durchgeführt wird.

4. Verfahren (100) nach einem der Ansprüche 1 bis 3, **da**- **durch gekennzeichnet** , dass das Verfahren (100) weiter die Schritte umfasst:
e) Ermitteln eines ersten Materialaustrittspunkts (33) und eines zweiten Materialeintrittspunkt (35);
f) Erzeugen eines zweiten Positionierungsbefehls (34) zu einem Anfahren des zweiten Materialeintrittspunkts (35) ausgehend vom ersten Materialaustrittspunkt (33).

5. Verfahren (100) nach einem der Ansprüche 1 bis 4, **da**- **durch gekennzeichnet**, dass der Steuerbefehlssatz (12) basierend auf einer Maximalkontur (28) des Werkstückes (20) ausgebildet ist.

6. Verfahren (100) nach einem der Ansprüche 1 bis 5, **da**- **durch gekennzeichnet** , dass die Ist-Kontur (22) des Werkstücks (20) während einer spanenden Bearbeitung wiederholt erfasst wird.

7. Verfahren (100) nach einem der Ansprüche 1 bis 6, **da**- **durch gekennzeichnet** , dass der erste und/oder zweite Materialeintrittspunkt (31,33) unmittelbar oder mit einem einstellbaren Sicherheitsabstand angefahren wird.

8. Verfahren (100) nach einem der Ansprüche 1 bis 7, **da**- **durch gekennzeichnet**, dass das Verfahren (100) in Echtzeit durchgeführt wird.

9. Verfahren (100) nach einem der Ansprüche 3 bis 8, **da**- **durch gekennzeichnet**, dass die vom ersten und/oder zweiten Positionierungsbefehl (32,34) vorgegebene Bahnlinie (15) mittels der Kollisionsvermeidungseinheit (45) der Werkzeugmaschine (50) geprüft wird.

10. Verfahren (100) nach einem der Ansprüche 1 bis 9, **da- durch gekennzeichnet** , dass die Ist-Kontur (22) des Werkstücks (20) in einem in der Werkzeugmaschine (50) eingespannten Zustand erfasst wird und/oder außerhalb der Werkzeugmaschine (50) erfasst wird.

11. Verfahren (100) nach einem der Ansprüche 1 bis 10, **dadurch gekennzeichnet, dass** der Steuerbefehlssatz (12), der erste und der zweite Positionierungsbefehl (32,34) als G-Code ausgebildet ist.

12. Verfahren (100) nach einem der Ansprüche 1 bis 10, **dadurch gekennzeichnet , dass** der erste und/oder zweite Positionierungsbefehl (32,34) direkt von der Steuereinheit (40) in Verfahrbewegungen umgerechnet wird.

13. Computerprogrammprodukt (70) zum Ausgeben von Steuerbefehlen (11) an eine Werkzeugmaschine (50), das zu einem Empfangen von Daten (25) einer Ist-Kontur (22) eines Werkstücks (20) ausgebildet ist, **dadurch gekennzeich-net**, dass das Computerprogrammprodukt (70) zu einem Durchführen eines Verfahrens (100) nach einem der Ansprüche 1 bis 12 ausgebildet ist.

14. Steuereinheit (40) für eine Werkzeugmaschine (50), umfassend eine Recheneinheit (43) und eine Speichereinheit (44), **dadurch gekennzeichnet, dass** die Steuereinheit (40) zu einem Durchführen eines Verfahrens (100) nach einem der Ansprüche 1 bis 12 ausgebildet ist.

15. Werkzeugmaschine (50), umfassend zumindest ein Werkzeug (10) zu einer spanenden Bearbeitung eines Werkstücks (20), das über Steuerbefehle (11) durch zumindest einem Antriebsmittel (54) beweglich ist, **dadurch gekenn**- **zeichnet**, dass die Werkzeugmaschine (50) mit einer Steuereinheit (40) nach Anspruch 14 ausgestattet ist.
